# EUROPEAN PATENT APPLICATION

(11) **EP 4 692 610 A1**
(43) Date of publication of application: **11.02.2026**
(21) Application number: 24777445.8
(22) Date of filing: 17.01.2024
(51) Int. Cl.: F16K 11/074

(54) **SPRING-LOADED MULTI-CHANNEL ELECTROMAGNETIC VALVE**

(30) Priority: 30.03.2023 CN 202310357138
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: LIN, Bingrong, Ningbo, Zhejiang 315899 (CN); XU, Junbo, Ningbo, Zhejiang 315899 (CN); DAI, Haijiang, Ningbo, Zhejiang 315899 (CN); WU, Chunming, Ningbo, Zhejiang 315899 (CN)
(74) Representative: Boult Wade Tennant LLP
(86) International application number: PCT/CN2024/072713
(87) International publication number: WO 2024/198650

(57) **Abstract**

Disclosed is a spring-loaded multi-channel electromagnetic valve (100), including a valve core assembly (110), a valve seat assembly (120), a sealing unit (130), and a power unit (140); where the valve seat assembly (120) includes a valve seat (121) and a valve cover (122), a first accommodating cavity (1211) is formed between openings respectively at two ends of the valve seat (121), the valve cover (122) covers one opening, the valve core assembly (110) and the sealing unit (130) are located in the first accommodating cavity (1211); the valve core assembly (110) includes a valve core body (111) and a stop member (112), and the valve core body (111) is provided with a plurality of channels which are distributed at intervals along a circumferential direction of the valve core body (111) and extend along an axial direction of the valve seat (121); the stop member (112) is connected to the valve core body (111); the sealing unit (130) includes a sealing ring (131) and an elastic member (132), the sealing ring (131) is provided with a plurality of through holes, the sealing ring (131) is connected to the valve seat (121), and the elastic member (132) is connected to the valve core body (111) and the stop member (112); the power unit (140) is connected to the stop member (112) and drives the valve core body (111) to rotate, such that at least one channel is opposite to the through holes in the sealing ring (131) to form a circulation passage for a cooling liquid; the valve core body can be kept abutted against the sealing ring, so that flowing of the cooling liquid in a circumferential gap between the valve core body and the valve seat is reduced, thereby improving the sealing performance of the valve body.

## Description

The present application claims priority to Chinese Patent Application No. 202310357138.6 filed with China National Intellectual Property Administration on March 30, 2023 and entitled "SPRING-LOADED MULTI-CHANNEL ELECTROMAGNETIC VALVE", which is hereby incorporated by reference in its entirety.

### TECHNICAL FIELD

The present application relates to the field of electromagnetic valves for new energy vehicles, in particular to a spring-loaded multi-channel electromagnetic valve.

### BACKGROUND

With the continuous promotion and development of new energy vehicles, pure electric vehicles have gained increasing popularity.

A temperature control system inside the pure electric vehicles is interconnected through electromagnetic valves to achieve temperature control for the entire vehicle. The electromagnetic valves include multi-channel electromagnetic valves and integral electromagnetic valves. The multi-channel electromagnetic valves require connection via pipelines, while each integral electromagnetic valve includes a valve core and a valve body, forming a passage for a cooling liquid through rotational cooperation of the valve core and the valve body.

However, during long-term use, these two types of electromagnetic valves are prone to pipeline aging and wear between the valve core and the valve body, which can lead to a reduction in the overall sealing performance of the electromagnetic valves, thereby affecting the temperature control effect of the vehicle.

### SUMMARY

The present application provides a spring-loaded multi-channel electromagnetic valve, which can improve the sealing performance of the electromagnetic valve, thereby improving the temperature control effect of the vehicle.

To achieve the aforementioned objectives, the present application adopts the following technical solutions.

The present application provides a spring-loaded multi-channel electromagnetic valve, including: a valve core assembly, a valve seat assembly, a sealing unit, and a power unit; where the valve seat assembly includes a valve seat and a valve cover, the valve seat is a rotary member, two ends of the valve seat are respectively provided with openings to form a first accommodating cavity, the valve cover covers one of the two openings, and each of the valve core assembly and the sealing unit is located in the first accommodating cavity;
the valve core assembly includes a valve core body and a stop member, a shape of an outer wall of the valve core body is consistent with a shape of the opening, the valve core body is provided with a plurality of channels extending along an axial direction of the valve seat, the plurality of channels are distributed at intervals along a circumferential direction of the valve core body; the stop member is connected to the valve core body;
the sealing unit includes a sealing ring and an elastic member, a shape of the sealing ring matches the shape of the opening of the valve seat, the sealing ring is provided with a plurality of through holes, the sealing ring is connected to an opening on a side of the valve seat facing away from the valve cover, the elastic member is connected between the valve core body and the stop member, and the valve core body is abutted against the sealing ring under an action of the elastic member; and
the power unit and the stop member are connected to drive the valve core body to rotate relative to the valve seat, so that at least one channel in the valve core body and the corresponding through hole in the sealing ring are opposite to form a circulation passage for a cooling liquid.

As a possible implementation, the elastic member is a spring, the spring extends along an axial direction of the valve core body, and a first end of the spring is connected to a side of the valve core body facing away from the channel, and a second end of the spring is connected to the stop member.

As a possible implementation, the plurality of through holes have a fan-shaped cross-section;
the channel is provided with a plurality of channel ports, shapes of the plurality of channel ports are all fan-shaped, and an area of each of the channel ports is smaller than an area of the through hole.

As a possible implementation, the plurality of through holes are distributed at intervals along a circumferential direction of the sealing ring; and part of the through holes and the channels are relatively distributed.

As a possible implementation, the valve core body includes a first end cover, a valve core housing and a second end cover, and the first end cover, the valve core housing and the second end cover are sequentially connected along an axis of the valve seat and form a second accommodating cavity.

As a possible implementation, the plurality of channels are located in the second accommodating cavity, and two ends of the plurality of channels are respectively connected to the plurality of channel ports, and the plurality of channel ports are located in the first end cover.

As a possible implementation, a center of the valve core housing is provided with a plurality of limiting parts, which are extending along an axial direction of the valve core housing, and a side of the limiting part facing away from the first end cover is provided with an opening;
the stop member includes a plurality of limiting columns, which are extending along the axial direction of the valve core body, and the limiting column is inserted into the limiting part.

As a possible implementation, the stop member further includes a first housing and a transmission member, the limiting column and the transmission member are respectively connected to opposite sides of the first housing, the first housing and the second end cover are connected and form a third accommodating cavity, and the transmission member is connected to the power unit.

As a possible implementation, the elastic member is located in the third accommodating cavity, and two ends of the elastic member are respectively abutted against the second end cover and the first housing.

As a possible implementation, the power unit includes a second housing, a transmission gear unit and a motor, the transmission gear unit and the motor are connected to the second housing, the second housing is connected to the valve seat assembly, and the transmission gear unit is connected to the stop member.

The present application provides a spring-loaded multi-channel electromagnetic valve, including: a valve core assembly, a valve seat assembly, a sealing unit, and a power unit; where the valve seat assembly includes a valve seat and a valve cover, the valve seat is a rotary member, two ends of the valve seat are respectively provided with openings to form a first accommodating cavity, the valve cover covers one of the two openings, and each of the valve core assembly and the sealing unit is located in the first accommodating cavity; the valve core assembly includes a valve core body and a stop member, a shape of an outer wall of the valve core body is consistent with a shape of the opening, the valve core body is provided with a plurality of channels extending along an axial direction of the valve seat, the plurality of channels are distributed at intervals along a circumferential direction of the valve core body; the stop member is connected to the valve core body; the sealing unit includes a sealing ring and an elastic member, a shape of the sealing ring matches the shape of the opening of the valve seat, the sealing ring is provided with a plurality of through holes, the sealing ring is connected to an opening on a side of the valve seat facing away from the valve cover, the elastic member is connected between the valve core body and the stop member, and the valve core body is abutted against the sealing ring under an action of the elastic member; and the power unit and the stop member are connected to drive the valve core body to rotate relative to the valve seat, so that at least one channel in the valve core body and the corresponding through hole in the sealing ring are opposite to form a circulation passage for a cooling liquid. The valve core and the sealing ring are kept in an abutting state under an action of an elastic force of an elastic member, so that flowing of the cooling liquid in a circumferential gap between the valve core body and the valve seat is reduced, thereby improving the sealing performance of the valve body and further enhancing the temperature control effect of the vehicle.

### BRIEF DESCRIPTION OF DRAWINGS

To describe the technical solutions in embodiments of the present application or in the prior art more clearly, the following briefly introduces the accompanying drawings needed for describing the embodiments or the prior art. Apparently, the accompanying drawings in the following description illustrate some embodiments of the present application, and persons of ordinary skill in the art may still derive other drawings from these accompanying drawings without creative effort.
FIG. 1 is a structural explosion diagram of a spring-loaded multi-channel electromagnetic valve according to an embodiment of the present application.
FIG. 2 is a structural explosion diagram of a valve core assembly and a sealing unit in a spring-loaded multi-channel electromagnetic valve according to an embodiment of the present application.
FIG. 3 is a structural schematic diagram of a valve core body in a spring-loaded multi-channel electromagnetic valve according to an embodiment of the present application.
FIG. 4 is a schematic diagram of a transmission structure of a power unit and a valve core assembly in a spring-loaded multi-channel electromagnetic valve according to an embodiment of the present application.
FIG. 5 is a schematic diagram of a distribution of through holes of a sealing ring in a spring-loaded multi-channel electromagnetic valve according to an embodiment of the present application.

Description of reference numerals:
100-spring-loaded multi-channel electromagnetic valve; 110-valve core assembly; 111-valve core body; 112-stop member; 1111-valve core housing; 1112-first end cover; 1113-second end cover; 1114-limiting part; 1115-second accommodating cavity; 1116-channel port; 1117-second end cover opening; 1121-limiting column; 1122-first housing; 1123-transmission member;
1116a-first channel port; 1116b-second channel port; 1116c-third channel port; 1116d-fourth channel port; 1116e-fifth channel port; 1116f-sixth channel port; 1116g-seventh channel port; 1116h-eighth channel port;
120-valve seat assembly; 121-valve seat; 122-valve cover;
1211-first accommodating cavity; 1212-bolt connection part;
130-sealing unit; 131-sealing ring; 132-elastic member; 1311-through hole; 1321-spring;
1311a-first through hole; 1311b-second through hole; 1311c-third through hole; 1311d-fourth through hole; 1311e-fifth through hole; 1311f-sixth through hole; 1311g-seventh through hole; 1311h-eighth through hole; 1311i-ninth through hole;
140-power unit; 141-second housing; 142-motor; 143-transmission gear unit;
1431-worm gear; 1432-worm wheel; 1433-first gear; 1434-second gear; 1435-third gear; 1436-fourth gear; 1437-fifth gear; 150-external sealing ring.

### DESCRIPTION OF EMBODIMENTS

To make the objectives, technical solutions, and advantages of embodiments of the present invention clearer, the following clearly and comprehensively describes the technical solutions in embodiments of the present invention with reference to the accompanying drawings in embodiments of the present invention. Apparently, the described embodiments are merely a part rather than all embodiments of the present invention. All other embodiments obtained by persons of ordinary skill in the art based on embodiments of the present invention without creative effort shall fall within the protection scope of the present invention. In the absence of conflict, embodiments and features in the embodiments described below may be combined with each other.

In the prior art, a temperature control system inside the pure electric vehicles is interconnected through electromagnetic valves to achieve temperature control for the entire vehicle. The electromagnetic valves include multi-channel electromagnetic valves and integral electromagnetic valves. The multi-channel electromagnetic valves require connection via pipelines, while each integral electromagnetic valve includes a valve core and a valve body, forming a passage for a cooling liquid through rotational cooperation of the valve core and the valve body. However, during long-term use, these two types of electromagnetic valves are prone to pipeline aging and wear between the valve core and the valve body, which can lead to a reduction in the overall sealing performance of the electromagnetic valves, thereby affecting the temperature control effect of the vehicle.

In order to overcome the defects in the prior art, the present application provides a spring-loaded multi-channel electromagnetic valve, including: a valve core assembly, a valve seat assembly, a sealing unit, and a power unit; where the valve seat assembly includes a valve seat and a valve cover, the valve seat is a rotary member, two ends of the valve seat are respectively provided with openings to form a first accommodating cavity, the valve cover covers one of the two openings, and each of the valve core assembly and the sealing unit is located in the first accommodating cavity; the valve core assembly includes a valve core body and a stop member, a shape of an outer wall of the valve core body is consistent with a shape of the opening, the valve core body is provided with a plurality of channels extending along an axial direction of the valve seat, the plurality of channels are distributed at intervals along a circumferential direction of the valve core body; the stop member is connected to the valve core body; the sealing unit includes a sealing ring and an elastic member, a shape of the sealing ring matches the shape of the opening of the valve seat, the sealing ring is provided with a plurality of through holes, the sealing ring is connected to an opening on a side of the valve seat facing away from the valve cover, the elastic member is connected between the valve core body and the stop member, and the valve core body is abutted against the sealing ring under an action of the elastic member; and the power unit and the stop member are connected to drive the valve core body to rotate relative to the valve seat, so that at least one channel in the valve core body and the corresponding through hole in the sealing ring are opposite to form a circulation passage for a cooling liquid. The valve core and the sealing ring are kept in an abutting state under an action of an elastic force of the elastic member, so that flowing of the cooling liquid in a circumferential gap between the valve core body and the valve seat is reduced, thereby improving the sealing performance of the valve body and further enhancing the temperature control effect of the vehicle.

The contents of the present invention will be described in detail below with reference to the accompanying drawings, so that those skilled in the art can more clearly and thoroughly understand the contents of the present invention.

The present application provides a spring-loaded multi-channel electromagnetic valve 100, including: a valve core assembly 110, a valve seat assembly 120, a sealing unit 130, and a power unit 140; where the valve seat assembly 120 includes a valve seat 121 and a valve cover 122, the valve seat 121 is a rotary member, two ends of the valve seat 121 are respectively provided with openings to form a first accommodating cavity 1211, the valve cover 122 covers one of the two openings, and each of the valve core assembly 110 and the sealing unit 130 is located in the first accommodating cavity 1211;
the valve core assembly 110 includes a valve core body 111 and a stop member 112, a shape of an outer wall of the valve core body 111 is consistent with a shape of the opening, the valve core body 111 is provided with a plurality of channels extending along an axial direction of the valve seat 121, the plurality of channels are distributed at intervals along a circumferential direction of the valve core body; the stop member 112 is connected to the valve core body 111;
the sealing unit 130 includes a sealing ring 131 and an elastic member 132, a shape of the sealing ring 131 matches the shape of the opening of the valve seat 121, the sealing ring 131 is provided with a plurality of through holes 1311, the sealing ring 131 is connected to an opening on a side of the valve seat 121 facing away from the valve cover 122, the elastic member 132 is connected between the valve core body 111 and the stop member 112, and the valve core body 111 is abutted against the sealing ring 131 under an action of the elastic member 132; and
the power unit 140 and the stop member 112 are connected to drive the valve core body 111 to rotate relative to the valve seat 121, so that at least one channel in the valve core body 111 and the corresponding through hole 1311 in the sealing ring 131 are opposite to form a circulation passage for a cooling liquid.

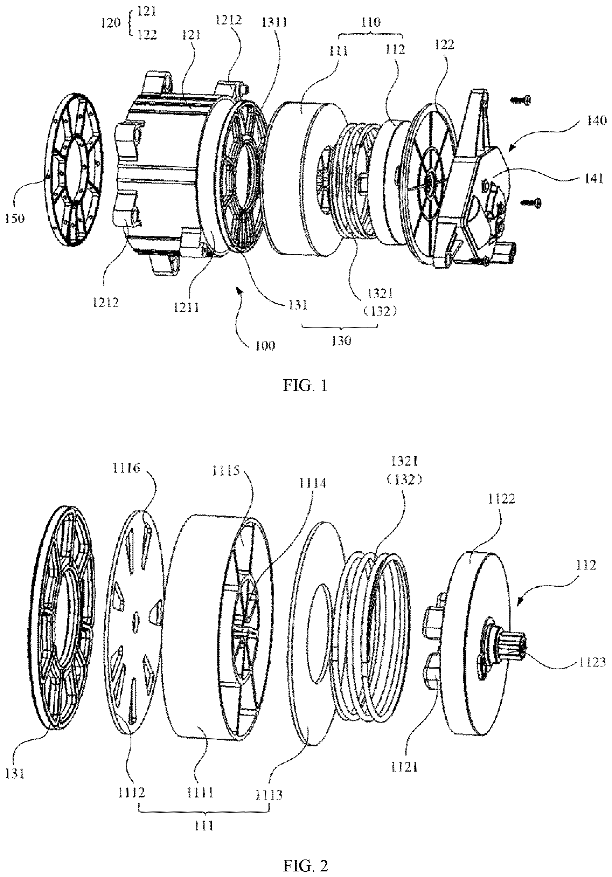

FIG. 1 is a structural explosion diagram of a spring-loaded multi-channel electromagnetic valve according to an embodiment of the present application; and FIG. 2 is a structural explosion diagram of a valve core assembly and a sealing unit in a spring-loaded multi-channel electromagnetic valve according to an embodiment of the present application.

As shown in FIG. 1, the valve seat assembly 120 in the present embodiment includes a valve seat 121 and a valve cover 122, a cross-section of the valve seat 121 is circular, the valve seat 121 is provided with openings respectively along two ends of the valve seat 121 in an axial direction thereof to form a first accommodating cavity 1211, the valve cover 122 is fixedly connected to one of the openings, a valve core assembly 110 is located in the first accommodating cavity 1211, and the valve cover 122 covers an end of the valve core assembly 110 in the axial direction of the valve seat 121.

The valve core assembly 110 includes a valve core body 111 and a stop member 112, the valve core body 111 and the stop member 112 are connected along the axial direction of the valve seat 121, and shapes of outer walls of the valve core body 111 and the stop member 112 are consistent with a shape of the opening of the valve seat 121, and the valve core body 111 is sealed in the first accommodating cavity 1211 through the valve cover 122 after the valve core body 111 and the stop member 112 are connected. As shown in FIG. 2, the valve core body 111 has a plurality of channels (not shown in the figure) inside, the plurality of channels are distributed at intervals along an axial direction of the valve core body 111, and the plurality of channels all extend along the axial direction of the valve core body 111, and each channel communicates inside the valve core body 111.

Still as shown in FIG. 1, an outer wall shape of the sealing ring 131 in the sealing unit 130 is also circular, and the sealing ring 131 is fixedly connected to an opening in the valve seat 121 facing away from a connection side of the valve cover 122, and the sealing ring 131 is provided with the plurality of through holes 1311, the plurality of through holes 1311 are distributed along a circumferential direction of the sealing ring 131 and are opposite to the plurality of channels in the valve core body 111 during the operation of the spring-loaded multi-channel electromagnetic valve. The sealing unit 130 further includes an elastic member 132, which is connected between the valve core body 111 and the stop member 112, and the valve core body 111 is abutted against the sealing ring 131 under an action of an elastic force of the elastic member 132.

In the present embodiment, the power unit 140 is connected to the stop member 112, and the power unit 140 may provide power to cause the valve core body 111 to rotate coaxially relative to the valve seat 121. At this time, at least one channel in the valve core body 111 and the corresponding through hole 1311 in the sealing ring 131 are opposite to form a circulation passage for a cooling liquid.

According to the above configuration, while ensuring that the electromagnetic valve is provided with a plurality of circulation passages for cooling liquids, the valve core and the sealing ring are kept in an abutting state under an action of the elastic force of the elastic member, so that flowing of the cooling liquid between the valve core body and a cavity wall of the first accommodating cavity in the valve seat is reduced, thereby improving the sealing performance of the entire electromagnetic valve.

As a possible implementation, the elastic member 132 is a spring 1321, the spring 1321 extends along an axial direction of the valve core body 111, and a first end of the spring 1321 is connected to a side of the valve core body 111 facing away from the channel, and a second end of the spring 1321 is connected to the stop member 112.

As shown in conjunction with FIGS. 1 and 2, the spring 1321 extends along the axial direction of the valve core body 111, two ends of the spring 1321 are connected to the valve core body 111 and the stop member 112, respectively. When the stop member 112 and the valve core body 111 are connected, the spring 1321 is compressed by both the valve core body 111 and the stop member 112, generating an elastic force that causes the spring 1321 to return to its natural charging state along its axial direction. At this time, the elastic force of the spring 1321 enables the valve core body 111 to move along the axial direction of the valve seat 121 and keep continuous abut against the sealing ring 131, thereby improving the sealing performance among the valve core body 111, the valve seat 121 and the sealing ring 131.

Optionally, the plurality of through holes 1311 have a fan-shaped cross-section;
the channel is provided with a plurality of channel ports 1116, shapes of the plurality of channel ports 1116 are all fan-shaped, and an area of each of the channel ports 1116 is smaller than an area of the through hole 1311.

Optionally, the plurality of through holes 1311 are distributed at intervals along a circumferential direction of the sealing ring 131; and part of the through holes 1311 and the channels are relatively distributed.

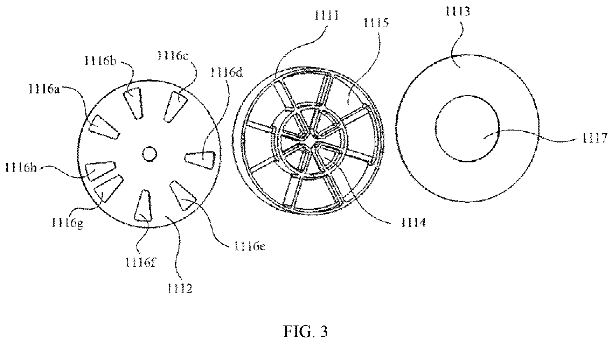

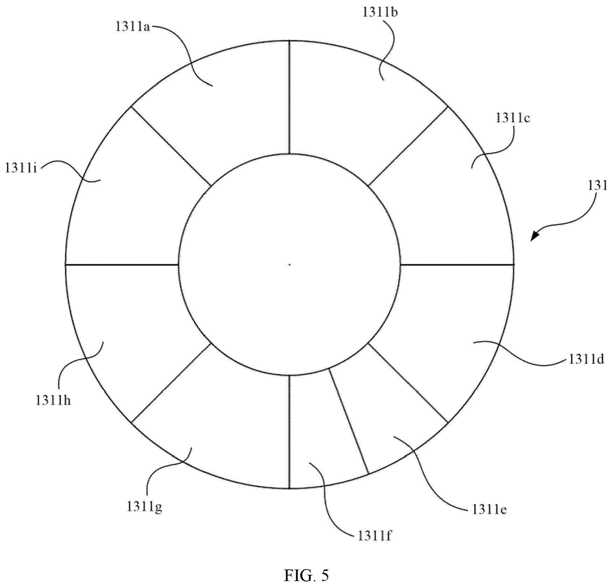

FIG. 3 is a structural schematic diagram of a valve core body in a spring-loaded multi-channel electromagnetic valve according to an embodiment of the present application; and FIG. 5 is a schematic diagram of a distribution of through holes of a sealing ring in a spring-loaded multi-channel electromagnetic valve according to an embodiment of the present application.

With reference to FIGS. 1 to 3 and 5, the plurality of through holes 1311 in the present embodiment are located on the sealing ring 131, and the plurality of through holes 1311 include a first through hole 1311a, a second through hole 1311b, a third through hole 1311c, a fourth through hole 1311d, a fifth through hole 1311e, a sixth through hole 1311f, a seventh through hole 1311g, an eighth through hole 1311h and a ninth through hole 1311i. The above through holes 1311 are sequentially distributed along the circumferential direction of the sealing ring 131, and each through hole 1311 is fan-shaped, where areas of the first through hole 1311a, the second through hole 1311b, the third through hole 1311c, the fourth through hole 1311d, the seventh through hole 1311g, the eighth through hole 1311h and the ninth through hole 1311i are the same, areas of the fifth through hole 1311e and the sixth through hole 1311f are the same, and a sum of the areas of the fifth through hole 1311e and the sixth through hole 1311f is the same as the area of the other through holes.

Correspondingly, the channel port 1116 is located on a side of the valve core body 111 facing the sealing ring 131, and the plurality of channel ports 1116 include a first channel port 1116a, a second channel port 1116b, a third channel port 1116c, a fourth channel port 1116d, a fifth channel port 1116e, a sixth channel port 1116f, a seventh channel port 1116g and an eighth channel port 1116h, and the above channel ports 1116 are distributed at intervals along a circumferential direction of the valve core body 111 on an end surface of the valve core body 111 facing the sealing ring 131. A shape of the channel por 1116 is also fan-shaped, and a fan-shaped area of the channel port 1116 is smaller than the area of the through hole 1311. When the valve body 111 rotates coaxially relative to the valve seat 121, the channel port 1116 is opposite to part of the through holes 1311.

Optionally, as shown in FIGS. 1 and 2, the valve core body 111 includes a first end cover 1112, a valve core housing 1111 and a second end cover 1113, and the first end cover 1112, the valve core housing 1111 and the second end cover 1113 are sequentially connected along an axis of the valve seat 121 and form a second accommodating cavity 1115. Specifically, the first end cover 1112 is welded with the valve core housing 1111, and the valve core housing 1111 is welded with the second end cover 1113.

As a possible implementation, the plurality of channels are located in the second accommodating cavity 1115, and two ends of the plurality of channels are respectively connected to the plurality of channel ports 1116, and the plurality of channel ports 1116 are located in the first end cover.

With reference to FIGS. 1-3, the second accommodating cavity 1115 of the valve core body 111 has a plurality of channels (not shown in the figures), which are extending along the axial direction of the valve core body 111, each channel has a channel port 1116, and the channel ports 1116 are located on the first end cover 1112. Specifically, the first channel port 1116a and the third channel port 1116c are connected by a first channel, the second channel port 1116b and the fourth channel port 1116d are connected by a second channel, the fifth channel port 1116e and the seventh channel port 1116g are connected by a third channel, the sixth channel port 1116f and the eighth channel port 1116h are connected by a fourth channel, and the cooling liquid flows in the valve core body 111 through the connections of the channels and the channel ports.

As a possible implementation, a center of the valve core housing 1111 is provided with a plurality of limiting parts 1114, which are extending along an axial direction of the valve core housing 1111, and a side of the limiting part 1114 facing away from the first end cover 1112 is provided with an opening;
the stop member 112 includes a plurality of limiting columns 1121, which are extending along the axial direction of the valve core body 1111, and the limiting column 1121 is inserted into the limiting part 1114.

As shown in FIGS. 2 and 3, the limiting part 1114 is located at a center of the valve core housing 1111, and the limiting part 1114 and an inner cavity wall of the second accommodating cavity 1115 are connected to form a plurality of cavities together. The limiting part 1114 extends along the axial direction of the valve core housing 1111, and a central opening of the second end cover 1113 is a second end cover opening 1117 in FIG. 3. The stop member 112 is provided with a plurality of limiting columns 1121, which are also located at a center of the stop member 112, and each limiting column 1121 extends along the axial direction of the valve core body 111 and is inserted into the limit part 1114.

There is a possible implementation, the stop member 112 further includes a first housing 1122 and a transmission member 1123, the limiting column 1121 and the transmission member 1123 are respectively connected to opposite sides of the first housing 1122, the first housing 1122 and the second end cover 1113 are connected and form a third accommodating cavity, and the transmission member 1123 is connected to the power unit 140.

Still as shown in FIG. 2, the stop member 112 includes a limiting column 1121, a first housing 1122, and a transmission member 1123, which are sequentially connected along the axial direction of the valve core body 111, the limiting column 1121 is connected to a side of the first housing 1122 facing the valve core body 111, and the transmission member 1123 is connected to a side of the first housing 1122 facing away from the valve core body 111, and the first housing 1122 and the second end cover 1113 of the valve core body 111 are connected to form a third accommodating cavity (not shown in the figure).

Specifically, the limiting column 1121 of the stop member 112 passes through the second end cover opening 1117, and is connected to the limiting part 1114 in the valve core body 111 correspondingly. The transmission member 1123 is connected to the power unit 140, and a rotation output by the power unit 140 drives the stop member 112 to rotate, and at the same time drives the valve core body 111 to rotate. At this time, each channel port 1116 on the first end cover 1112 and the through hole 1311 on the seal ring 131 are opposite to each other, and the cooling liquid circulates through the corresponding through hole 1311 and the channel port 1116. It should be noted that, the number of both the limiting columns 1121 and the limiting parts 1114 provided in the present embodiment is four, and they are mutually correspondingly connected. It is not difficult to understand that the number of the limiting columns 1121 may also be two, while the number of the limiting parts 1114 remains four, and the two limiting columns 1121 may be correspondingly connected to two of the limiting parts 1114, which is still capable of achieving the connection function. Therefore, the present embodiment does not specifically limit the number of the limiting columns and the limiting parts or their relative connection position, as long as their connection satisfies the structural design requirements.

It can be understood that, the elastic member 132 is located in the third accommodating cavity, and two ends of the elastic member 132 are respectively abutted against the second end cover 1113 and the first housing 1122. A first end of the elastic member 132 is connected to the second end cover 1113, and a second end of the elastic member 132 is connected to the first housing 1122 and is connected to a side of the first housing 1122 facing the second end cover 1113. When the first housing 1122 and the second end cover 1113 are connected, an elastic force of the elastic member 132 can keep the first end cover 1112 of the valve body 111 and the seal ring 131 in an abutting state.

As a possible implementation, the power unit 140 includes a second housing 141, a transmission gear unit 143 and a motor 142, the transmission gear unit 143 and the motor 142 are connected to the second housing 141, the second housing 141 is connected to the valve seat assembly 120, and the transmission gear unit 143 is connected to the stop member 112.

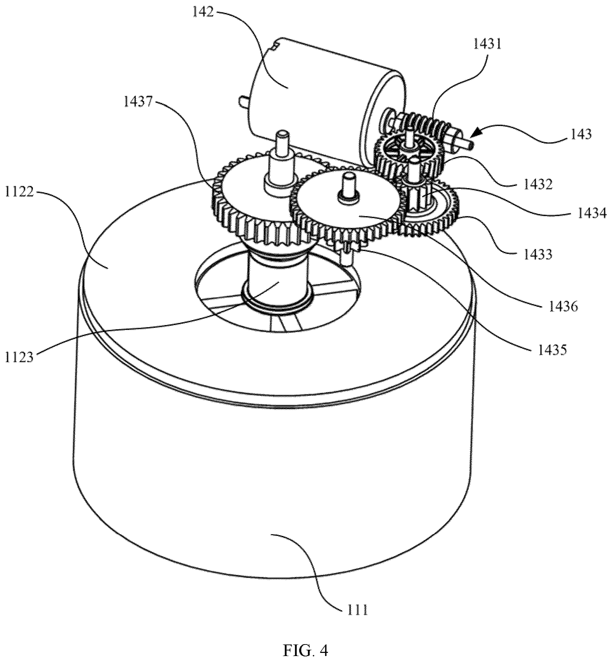

FIG. 4 is a schematic diagram of a transmission structure of a power unit and a valve core assembly in a spring-loaded multi-channel electromagnetic valve according to an embodiment of the present application.

With reference to FIGS. 1 and 4, in the present embodiment, the power unit 140 includes a second housing 141, a transmission gear unit 143, and a motor 142. The second housing 141 covers a side of the transmission gear unit 143 and the motor 142, where the motor 142 is connected to the transmission gear unit 143, and the transmission gear unit 143 is connected to the stop member 112.

Specifically, the transmission gear unit 143 includes a worm gear 1431, a worm wheel 1432, a first gear 1433, a second gear 1434, a third gear 1435, a fourth gear 1436 and a fifth gear 1437. The worm gear 1431 is connected to the motor 142, and the worm wheel 1432 is engaged with the worm gear 1431 for transmission. One side of the worm wheel 1432 is meshed with the worm gear 1431 for transmission, while the other side is meshed with the first gear 1433. The second gear 1434 is coaxially connected to the first gear 1433, and the second gear 1434 is meshed with the fourth gear 1436 for transmission. The third gear 1435 is coaxially connected to the fourth gear 1436, and the third gear 1435 is meshed with the fifth gear 1437 for transmission. The fifth gear 1437 is fixedly and coaxially connected to the transmission member 1123 of the stop member 112.

The second gear 1434 and the first gear 1433 are coaxially connected along the axial direction of the valve core body 111, and the second gear 1434 is connected to the side facing away from the valve core body 111; the third gear 1435 and the fourth gear 1436 are coaxially connected along the axial direction of the valve core body 111, and the fourth gear 1436 is connected to the side facing away from the valve core body 111. It should be noted that design parameters of the worm wheel, worm gear and gears in the transmission gear unit 143 are specifically designed according to the actual situation, and the present embodiment is not specifically limited thereto.

Through the configuration of the power unit 140, a rotational torque output by the motor 142 can drive the valve core body 111 to rotate relative to the valve seat 121 through the transmission of the transmission gear unit 143 and the connection with the stop member 112.

It is not difficult to understand that in the present embodiment, the valve seat 121 further has a plurality of bolt connection parts 1212, the valve seat 121 may be connected to an external mechanism by the bolt connection parts 1212, and the second housing 141 and the valve seat 121 may also be fixedly connected by the bolt connection parts 1212. It should be noted that when the valve seat 121 is connected to the external mechanism, it is also necessary to seal, and specifically, it can be connected by the external sealing ring 150. The structures of the external sealing ring 150 and the sealing ring 131 are completely the same, and when the external sealing ring 150 and the valve seat 121 are connected, through holes in the external sealing ring 150 and the through holes in the sealing ring 131 need to correspond to each other.

Hereinafter, the operating state of the spring-loaded multi-channel electromagnetic valve provided by the present embodiment will be described.

The sealing ring 131 and the valve seat 121 are fixedly connected, the valve core body 111 rotates coaxially relative to the valve seat 121, and the channel port 1116 on the first end cover 1112 of the valve core body 111 and the through holes on the sealing ring 131 can be relatively communicated during the rotation of the valve core body 111. In a certain operating state, the first channel port 1116a and the ninth through hole 1311i are opposite to each other, and the third channel port 1116c communicating with the first channel port 1116a through the first channel and the second through hole 1311b are opposite to each other. It is not difficult to understand that the cooling liquid flows through the through hole and the channel port opposite to each other as well as the channel, and it should be noted that the flow direction of the cooling liquid is not specifically limited thereto.

Correspondingly, the second channel port 1116b and the first through hole 1311a are opposite to each other, and the fourth channel port 1116d communicating with the second channel port 1116b through the second channel and the third through hole 1311c are opposite to each other, and the cooling liquid flows through the through hole and the channel port opposite to each other as well as the channel.

The fifth channel port 1116e and the fourth through-hole 1311d are opposite to each other, and the seventh channel port 1116g communicating with the fifth channel port 1116e through the third channel and the seventh through hole 1311g are opposite to each other, and the cooling liquid flows through the through hole and the channel port opposite to each other as well as the channel.

The sixth channel port 1116f and the sixth through-hole 1311f are opposite to each other, and the eighth channel port 1116h communicating with the sixth channel port 1116f through the fourth channel and the eighth through hole 1311h are opposite to each other, and the cooling liquid flows through the through hole and the channel port opposite to each other as well as the channel.

The fifth through hole 1311e is not opposite to any of the channel ports 1116, and at this time, the first end cover 1112 and the fifth through hole 1311e are opposite to each other, and the cooling liquid does not flow at the fifth through hole 1311e.

It can be understood that the above operating state is only one of various operating states of the spring-loaded multi-channel electromagnetic valve 100 provided by the present application. The power unit 140 controls the valve core body 111 to rotate relative to the valve seat 121 and the sealing ring 131. Correspondingly, the channel ports 1116 and the through holes 1311 may experience relative positional changes. When the valve core body 111 rotates for different angles, the channel ports 1116 are opposite to different through holes 1311, resulting in multiple different communicating positions. This achieves the various operating states of the spring-loaded multi-channel electromagnetic valve 100.

The present application provides a spring-loaded multi-channel electromagnetic valve, including: a valve core assembly, a valve seat assembly, a sealing unit, and a power unit; where the valve seat assembly includes a valve seat and a valve cover, the valve seat is a rotary member, two ends of the valve seat are respectively provided with openings to form a first accommodating cavity, the valve cover covers one of the two openings, and each of the valve core assembly and the sealing unit is located in the first accommodating cavity; the valve core assembly includes a valve core body and a stop member, a shape of an outer wall of the valve core body is consistent with a shape of the opening, the valve core body is provided with a plurality of channels extending along an axial direction of the valve seat, the plurality of channels are distributed at intervals along a circumferential direction of the valve core body; the stop member is connected to the valve core body; the sealing unit includes a sealing ring and an elastic member, a shape of the sealing ring matches the shape of the opening of the valve seat, the sealing ring is provided with a plurality of through holes, the sealing ring is connected to an opening on a side of the valve seat facing away from the valve cover, the elastic member is connected between the valve core body and the stop member, and the valve core body is abutted against the sealing ring under an action of the elastic member; and the power unit and the stop member are connected to drive the valve core body to rotate relative to the valve seat, so that at least one channel in the valve core body and the corresponding through hole in the sealing ring are opposite to form a circulation passage for a cooling liquid. The valve core and the sealing ring are kept in an abutting state under an action of an elastic force of the elastic member, so that flowing of the cooling liquid in a circumferential gap between the valve core body and the valve seat is reduced, thereby improving the sealing performance of the valve body and further enhancing the temperature control effect of the vehicle.

It should be noted that the terms "one embodiment," "an embodiment," "an exemplary embodiment," "some embodiments," etc., as mentioned in the specification, indicate that the described embodiments may include certain features, structures, or characteristics, but not every embodiment necessarily includes those specific features, structures, or characteristics. Moreover, such phrases do not necessarily refer to the same embodiment. Furthermore, when describing specific features, structures, or characteristics in conjunction with one embodiment, it is within the knowledge of a person skilled in the art to implement such features, structures, or characteristics in conjunction with other embodiments, whether explicitly or implicitly described.

In general, the terms used herein should be understood at least in part based on the context of their use. For example, at least in part depending on the context, the term "one or more" as used herein may describe any feature, structure, or characteristic in the singular sense, or may describe a combination of features, structures, or characteristics in the plural sense. Similarly, at least in part depending on the context, terms such as "a" or "the" may be understood to convey singular usage or plural usage.

It should be readily understood that the terms "on," "over," and "above" as used in the present application should be interpreted in the broadest manner possible, such that "on" not only means "directly on something," but also includes "on something" with intermediate features or layers, and "over" or "above" includes not only the meaning of "over or above something," but also the meaning of "over or above something" without intermediate features or layers (i.e., directly on something).

Additionally, for ease of explanation, spatial relative terms such as "below," "beneath," "under," "above," "over," etc., may be used herein to describe the relationship of one element or feature to another element or feature as illustrated in the figures. The spatial relative terms are intended to encompass orientations other than those depicted in the figures during use or operation of the device. The apparatus may have other orientations (rotated 90 degrees or otherwise), and the spatial relative descriptive terms used herein may be interpreted accordingly.

Finally, it should be noted that the foregoing embodiments are merely intended for describing the technical solutions of the present invention other than limiting the present invention. Although the present invention is described in detail with reference to the foregoing embodiments, persons of ordinary skill in the art should understand that they may still make modifications to the technical solutions described in the foregoing embodiments or make equivalent substitutions to some technical features thereof. However, these modifications or substitutions do not cause the essence of the corresponding technical solutions to deviate from the scope of the technical solutions of each embodiment of the present invention.

## Claims

1. A spring-loaded multi-channel electromagnetic valve, comprising:
a valve core assembly, a valve seat assembly, a sealing unit, and a power unit; wherein the valve seat assembly comprises a valve seat and a valve cover, the valve seat is a rotary member, two ends of the valve seat are respectively provided with openings to form a first accommodating cavity, the valve cover covers one of the two openings, and each of the valve core assembly and the sealing unit is located in the first accommodating cavity;
the valve core assembly comprises a valve core body and a stop member, a shape of an outer wall of the valve core body is consistent with a shape of the opening, the valve core body is provided with a plurality of channels extending along an axial direction of the valve seat, the plurality of channels are distributed at intervals along a circumferential direction of the valve core body; the stop member is connected to the valve core body;
the sealing unit comprises a sealing ring and an elastic member, a shape of the sealing ring matches the shape of the opening of the valve seat, the sealing ring is provided with a plurality of through holes, the sealing ring is connected to an opening on a side of the valve seat facing away from the valve cover, the elastic member is connected between the valve core body and the stop member, and the valve core body is abutted against the sealing ring under an action of the elastic member; and
the power unit and the stop member are connected to drive the valve core body to rotate relative to the valve seat, so that at least one channel in the valve core body and the corresponding through hole in the sealing ring are opposite to form a circulation passage for a cooling liquid.

2. The spring-loaded multi-channel electromagnetic valve according to claim 1, wherein the elastic member is a spring, the spring extends along an axial direction of the valve core body, and a first end of the spring is connected to a side of the valve core body facing away from the channel, and a second end of the spring is connected to the stop member.

3. The spring-loaded multi-channel electromagnetic valve according to claim 1 or 2, wherein the plurality of through holes have a fan-shaped cross-section;
the channel is provided with a plurality of channel ports, shapes of the plurality of channel ports are all fan-shaped, and an area of each channel port is smaller than an area of the through hole.

4. The spring-loaded multi-channel electromagnetic valve according to claim 3, wherein the plurality of through holes are distributed at intervals along a circumferential direction of the sealing ring; and
part of the through holes and the channels are relatively distributed.

5. The spring-loaded multi-channel electromagnetic valve according to claim 4, wherein the valve core body comprises a first end cover, a valve core housing and a second end cover, and the first end cover, the valve core housing and the second end cover are sequentially connected along an axis of the valve seat and form a second accommodating cavity.

6. The spring-loaded multi-channel electromagnetic valve according to claim 5, wherein the plurality of channels are located in the second accommodating cavity, and two ends of the plurality of channels are respectively connected to the plurality of channel ports, and the plurality of channel ports are located in the first end cover.

7. The spring-loaded multi-channel electromagnetic valve according to claim 6, wherein a center of the valve core housing is provided with a plurality of limiting parts, which are extending along an axial direction of the valve core housing, and a side of the limiting part facing away from the first end cover is provided with an opening;
the stop member comprises a plurality of limiting columns, which are extending along the axial direction of the valve core body, and the limiting column is inserted into the limiting part.

8. The spring-loaded multi-channel electromagnetic valve according to claim 7, wherein the stop member further comprises a first housing and a transmission member, the limiting column and the transmission member are respectively connected to opposite sides of the first housing, the first housing and the second end cover are connected and form a third accommodating cavity, and the transmission member is connected to the power unit.

9. The spring-loaded multi-channel electromagnetic valve according to claim 8, wherein the elastic member is located in the third accommodating cavity, and two ends of the elastic member are respectively abutted against the second end cover and the first housing.

10. The spring-loaded multi-channel electromagnetic valve according to any one of claims 1-9, wherein the power unit comprises a second housing, a transmission gear unit and a motor, the transmission gear unit and the motor are connected to the second housing, the second housing is connected to the valve seat assembly, and the transmission gear unit is connected to the stop member.
